# EUROPEAN PATENT SPECIFICATION

(11) **EP 1 581 437 B1**
(45) Date of publication and mention of the grant of the patent: **21.03.2007**
(21) Application number: 03782024.8
(22) Date of filing: 22.12.2003
(51) Int. Cl.: B65D 55/08

(54) **SHEET LIKE SEALING MEMBER FOR PACKAGING CONTAINERS AND SEALING METHOD**
FLÄCHIGES SIEGELELEMENT FÜR VERPACKUNGSBEHÄLTNISSE UND VERSIEGELUNGSVERFAHREN
FEUILLE POUR FERMER HERMETIQUEMENT DES COQUES D'EMBALLAGE ET PROCEDE DE FERMETURE HERMETIQUE

(30) Priority: 06.01.2003 EP 03447001; 31.07.2003 EP 03447203
(43) Date of publication of application: 05.10.2005
(73) Proprietor: NV Limbo Plastics, 3830 Wellen (BE)
(72) Inventor: DRIESSEN, Jan, B-3721 Vliermaalroot (BE); VANMECHELEN, Laurent, B-3690 Zutendaal (BE)
(74) Representative: Leherte, Georges M.L.M.
(86) International application number: PCT/BE2003/000227
(87) International publication number: WO 2004/060767

(56) References cited:
- FR-A- 2 696 719
- US-A- 3 186 581
- US-A- 3 516 852
- US-A- 4 775 076
- PATENT ABSTRACTS OF JAPAN vol. 2002, no. 06, 4 June 2002 (2002-06-04) -& JP 2002 046775 A (TOPPAN PRINTING CO LTD), 12 February 2002 (2002-02-12)

## Description

The invention relates to sealable packaging, in particular for the food market.

Current packaging containers in this market segment involve at least one rigid part, either made of thermoplastic material specially treated with a thin coating of PE (polyethylene) or of other material, such as cardboard coated with a thin plastic layer, which is sealed by means of a foil material (plastic, aluminium, paper or cardboard). Glass containers sealed by means of a foil are also known.

A sealed packaging, ranging from product tight to completely gas tight, can be obtained quickly and efficiently, by forming a welding joint between the rigid part and the foil. Depending on the application the foil has to be cut open in order to open the packaging or can be pealed of.

Similar technology is applied for packaging containers in which the foil is replaced by a second rigid part (being the container lid) which is generally shaped as a dome. This may be achieved in various ways :
■ by welding two identical thermoplastic synthetic materials. In this way one obtains a good adhesion, but because the material is truly molten together, it is very difficult to open even if only a small portion of the periphery is welded. Typical examples are polystyrene containers with polystyrene lids.
■ by using a polyethylene (PE) coating applied on a plastic foil (in general PVC or PET). Both parts thus have a PE-layer on the weld side. As such this system provides good welding and the pealability can even be influenced by the type of PE and by adjusting the temperature and the time during the welding. This however also involves the main drawback of this method : the welding temperature has to be conveyed through de support material which is, by definition, a thermoplastic material which is in itself temperature sensitive. The temperature has however to be perfectly appropriate to allow the welding of the two PE layers. As thermoplastic materials have a rather high isolation value, the high temperature does not easily reach the PE layer through the support material. In addition the moulding of dome shaped lids requires rather thick sheets (250-600 µ) which is quite high compared to the thickness of the welding layer. The method is accordingly quite critical and therefore risky. The consequences are bad welding joints due to insufficient melting of the PE layers (too short welding times or too low welding temperatures) or burned through sheets (too long welding times or too high welding temperatures). Between these two extreme phenomena the pealability (separating the container lid from the container bottom) is very uncertain. In particular when looking for microwave proof support materials (appropriately PP, polypropylene) one encounters insuperable obstacles. PP does indeed not resist to temperatures required to bring a PE-layer to the right welding temperature. In addition there are problems when stacking such parts during processing, due to the sticky surface of the PE-layers.
■ a recent improvement of the technique involves applying locally a sealing medium on one or both surfaces of the plastic support material, by printing techniques. The welding temperatures are lower in this case so that the drawbacks of the method can be reduced. The quality of the welding joints is however still considerably less than that with conventional sealing foil techniques. A further disadvantage is the fact that the sealing medium remains soft for some time so that the seal remains fragile, even after cooling down completely. In addition the PP - application (microwave application) is not compatible with this technique due to insufficient adhesion of the sealing medium to PP.

In the early nineties, French patent publication FR 2 696 719 disclosed the concept of a packaging in which separate sealing means, such as in particular a thermo sealed peripheral cover sheet, are used to provide a tight mechanical connection between two container halves comprising corresponding adjacent peripheral rims.

The practical implementation of this concept has however considerable difficulties, in respect of the handling of the sealing means, in respect of proper welding without damaging the sealing sheet, in respect of suitable removability of the sealing sheet, etcetera.

Another approach has been proposed in US patent 4.775.076, involving a flexible seal tape welded or glued against two outer cylindrical lip surfaces provided on the peripheral flanges of the container and of the cover. The seal tape may be of the multilayer type comprising an aluminium foil as diffusion barrier, covered by a film of heat sealable material.

This approach raises similar drawbacks in respect of the handling and/or processing performance and the sealing and/or pealability performance of the seal tape.

It is the objective of this invention to provide a packaging method and packaging containers which overcome the obstacles and drawbacks of the state of the art packaging techniques, and which, at the same time enables to satisfy many further current requirements and/or trends for packaging containers in the food market segment, such as in particular :
■ tamper proof and tamper evident properties
■ visibility of the product
■ reclosability of the packaging
■ reusability of the packaging
■ ease of use :
   ease of opening
   ease of access to the product
■ increasing the freshness lifetime of the product
■ extended conservation of the product with opened packaging
■ possibility of warming up the product in its packaging
■ linking sales-units of assorted products
■ applying information on the packaging
■ satisfying environmental aspects
   use of environmental friendly recyclable materials and/or selective separation of mono materials (less need of composite materials)
■ possibility of a suspension system for the packaging
■ new possibilities for (sealed) multi compartment convenience packaging

To achieve these objectives, the invention provides for a sheet like sealing member having a flat shape for closing a packaging container involving two container halves, each comprising corresponding peripheral flanges shaped in such way that the corresponding flanges provide, in closed position of the container, adjacent peripheral rims lying substantially on one surface and allow the peripheral sealing of said container halves by means of such sheet like sealing member covering said adjacent peripheral rims, wherein said sheet like sealing member comprises at least one first layer having a support function consisting of or comprising a material selected from paper and cardboard, and at least one second layer having a sealing function, consisting of thermally active sealing material.

The first layer having a support function, consist preferably of a material which remains stable (i.e. both mechanically and thermally) under the applied sealing conditions.

According to a further preferred feature of the invention, the first layer having a support function, may in particular have a "basis weight" parameter of 100 g/m² to 180 g/m², and the second layer having a sealing function, may in particular have a "basis weight" parameter of 30 g/m² to 60 g/m² and consists of thermally active sealing material.

The "basis weight" parameter referred to here above corresponds to the parameter commonly used in the sheet material trade to express the weight per square meter of the material (in gram / m²), which essentially corresponds to an indication of the sheet material.

According to a still another preferred feature of the invention, the composite sheet material of the sealing member, comprising said two layers, should very suitably show a "rigidity" index (e-modulus), according to ASTM D 747 and DIN 53864, ranging from 0,75 to 15 Newton.

More preferably the composite sheet material shows a maximum "rigidity" index parameter according to one first direction of the sheet ranging from 1,5 to 15 Newton and a minimum "rigidity" index parameter according to a direction substantially perpendicular to said first direction of the sheet, ranging from 0,75 to 7,5 Newton.

Most preferably the composite sheet shows a maximum "rigidity" index according to a first direction of the sheet ranging from 2 to 10 Newton and a minimum "rigidity" index ranging from 1,25 to 6 Newton.

According to the invention, the first layer of the sheet like sealing member, having a support function, consists of or comprises a material selected from paper and cardboard, wherein the second layer, having a sealing function, may in particular be a seal/peal material comprising polyethylene and/or polyethylene terephthalate.

For paper the "basis weight" parameter values stated here above for the first layer having a support function correspond to thickness values of approximately 95 to 175 micron, and for polyethylene the "basis weight" parameter values stated here above for the second layer having a sealing function correspond to thickness values of approximately 33 to 70 micron.

According to a further preferred feature of the invention, the support layer constitutes more particularly a printable outer layer selected from paper, cardboard.

The invention also provides for a packaging method comprising sealing two container halves by welding a peripheral sheet like sealing member over adjacent peripheral rim surfaces on corresponding peripheral flanges of the container halves, wherein said container halves have a shape specifically designed to allow the sealing thereof by means of a peripheral sheet like sealing member as defined above; and for
a packaging container comprising two container halves closed and sealed together via corresponding peripheral flanges of said container halves, said peripheral flanges being shaped in such way that the corresponding flanges provide adjacent peripheral rims lying substantially on one surface and sealed together by means of a peripheral sheet like sealing member covering said adjacent peripheral rims, wherein a sheet like sealing member is used as defined above.

The two container halves can consist of two separate elements of the same or different material, or of two integral elements moulded together from the same material and connected together via a material hinge. These latter features are well know per se in this art.

The expression "sealed" as used herein has to be understood in a broad sense, i.e. in the sense of being attached or fixed together, rather than in the more limitative sense of "hermetically sealed", in which latter sense the expression is sometimes used elsewhere.

According to a preferred feature of the invention, the corresponding peripheral flanges may in particular each comprise at least one peripheral flat rim, shaped in such way that the surface of the respective rims lie, in closed position of the container, substantially on one flat surface.

According to a further preferred feature of the invention, the corresponding flat surfaces of the respective rims of the two container halves are designed so as to allow the sealing of said two container halves by means of one flat peripheral sheet like sealing member.

Still further preferred features of the invention involve that :
the container halves may be made of thermoplastic material;
the material for the "bottom" halve of the container may in particular be
selected from PS, PET, PP, HDPE, PVC, glass, cardboard and metal;
the material of the "top" halve (lid, cover) may in particular be selected from PS, PET, PP and PVC;
one of the container halves may be made of transparent or translucent;
the size of the "bottom" halve may in particular be larger than the "top" halve, providing a welding rim extending beyond the rim of the "lid" part;
the size of the "top" halve may in particular be smaller than the "bottom" halve, to cooperate with the flat welding rim at the outer periphery of the "bottom" halve.

The sealing member, comprising a paper or cardboard top layer with a polyethylene welding layer may be particularly interesting for printing publicity and other information. It may also be used to provide means for a more easy removal of the sealing member (such as tearing provisions, etc.).

The sealing of the container halves may in particular be performed by welding techniques, in themselves very well know in the art, involving (a) peripheral welding element(s). In the method according to the invention the welding element(s) will be applied to the side of the containers' sealing rim with the peripheral sheet like sealing member, possibly with supporting elements applied to the other side.

The containers may be hermetically closed / sealed (gastight sealing) - optionally involving a controlled atmosphere - or not hermetically closed /sealed - with only partial sealing of the rims and/or aerating holes in one or both container halve(s).

Thanks to the easily sealable third element or part (sealing member) of the container, which comprises the welding- and pealing material, the material of the other (rigid) parts, in particular the sealed dome (lid or cover) part, becomes less critical. A universal (all purpose) welding material, applied to the bottom side of this third part will ensure the connection of the two container halves, regardless whether they are made of the same of different material. The thickness of the two container halves is also not relevant anymore, as the welding temperature has only to be sent through the third (thin)element. It becomes therefore possible to use (microwave stable) PP for the rigid container halves ("**dome**" like property of the packaging).

The third (sealing) element has a minimum width which corresponds to the width of the welding joints (adjacent peripheral rims of the corresponding flanges of the two container halves); this width may for instance be 12 mm. or more which constitutes a well visible band around the packaging. The sealing member therefore provides an obvious evidence of tampering (opening, damaging) to the closing / sealing element. (**tamper prove evident** property of the packaging).

Both (rigid) parts can be made of entirely transparent material (product visibility property of the packaging).

Thanks to the adjacent rims (and optionally additional click-closures) the two container halves can easily be made re closable (**reclosability** property of the packaging).

Because the two container halves may involve a reclosability function, the packaging may have a "second live" function (**re usability** property of the packaging).

The possibility for providing easy opening of the sealed packaging is an essential asset of the invention; the only (simple) thing to do is to peal off the strip from the flanges around the rigid packaging container, which can be compared to removing the protective foil from conventional margarine trays (**ease of opening** property of the packaging).

Due to the possibility of a tray with a dome shaped lid, the packaging according to the invention can provide very good accessibility to the product (for instance slices can be cut from a piece of cheese actually lying on its packaging tray : **ease of access** property of the packaging). (Ease of opening and ease of access together provide the **ease of use** property of the packaging)

In the same way as for welding foil closures, the packaging concept according to the invention allows various measures increasing the freshness lifetime of the product, with or without MAP (modified atmosphere packaging) concept (increased **freshness lifetime** property of the packaging).

In view of the fact that the concept of the packaging according to the invention involves is reclosability, products can remain fresh for a longer period (property of **extended conservation** of the product with opened packaging).

The concept of the invention allows microwave warming, with or without anti-dehydration protection (such as a foil or lid). The rigid parts of the packaging container can, indeed, be made of microwave proof material (PP, C-PET, cardboard, etc. - it should be noted however that the last two make loose the "transparency" property). As a consequence the concept according to the invention allows the first ever transparent dome shaped microwave proof packaging container. (property of **warming up** the product in its packaging).

The concept allows to provide two separate packaging containers mutually linked via the third element (the sealing member), optionally in a way that the linked containers can be easily separated (property of **linking sales-units** of assorted products).

The concept allows a number of possibilities to provide information on the packaging:
first there is the peripheral sealing strip itself positioned around the container which can provide a first information carrier (which could possibly replace stickers and the like)
the centre piece of sheet like material left when cutting out the inner window from the material to make the peripheral sealing member / strip can on the other hand be used for several functions : parts thereof can be folded (upward for instance) to replace labels or stickers; the centre piece can also be applied to the bottom of the packaging with printed information; the centre piece can also be used as support for the product inside the container, for example for a piece of pie, etc. (the property of the invention to allow **applying information on the packaging**)

The two rigid elements of the packaging container can be made of one single mono material (actually without any sealing medium on these two parts); the sealing medium is only comprised on the most light and smallest part of the packaging container elements, being the third (sealing member) element. The coated paper or cardboard peripheral strip or ring, is even recycled as if completely consisting of cardboard.

As the two rigid parts are furthermore separated in two individual parts by pealing of the third element and as, in addition, this third element can replace all stickers and labels, the waste material can be separated very selectively. This constitutes the property **satisfying environmental aspects**, i.e. use of environmental friendly recyclable materials and/or selective separation of mono materials (less need of composite materials).

As the outer shape of the third element (the sealing member) is not determined by the two rigid elements, this shape can also be provided such that it comprises a hanging device, such as a "euroslot" (**suspension system** property of the invention). This embodiment of the invention is more intended for non-food applications (for instance shaving blades, etc.).

The use of a separate (third) sheet like sealing member for the two packaging halves also offers new possibilities for designing multi compartment convenience packaging and for designing a packaging with a tamper proof sealing member.

The invention may involve various types of material for the rigid container halves. Possible materials (which can be used in combinations), are for instance:
- polyvinylchloride (PVC)
- polyethyleneterefthalate PET, either amorphous (A PET) or crystalline (C PET)
- polystyrene (PS)
- polypropylene (PP)
- biodegradable materials (such as PLA)
- cardboard, cardboard composites, paper
- ceramic materials.

The field of application of the invention includes, inter alia :
- complete replacement of existing sealed "dome" type packaging
- high quality fresh vegetables and fruit, where tamper proof or tamper evidence is very important due to the high value of the product
- fresh meat and meat preparations
- fresh fish and fish preparations
- prepared meals
- salads
- cheese
- cookies
- chocolate
- ice-cream preparations
- pastry (pies and the like)
- non-food applications

Further features and properties of the invention will become apparent from the following detailed description of preferred embodiments of packaging containers and packaging methods according to the invention. Reference is made in this detailed description to the enclosed drawings, in which :
Figure 1 illustrates the principle of the sealing method for packaging containers according to the invention;
Figure 2 is a perspective elevation view of one example of a packaging container according to the invention;
Figures 3-8 illustrate different preferred embodiments for the shape of the cooperating peripheral flanges for packaging containers according to the invention.

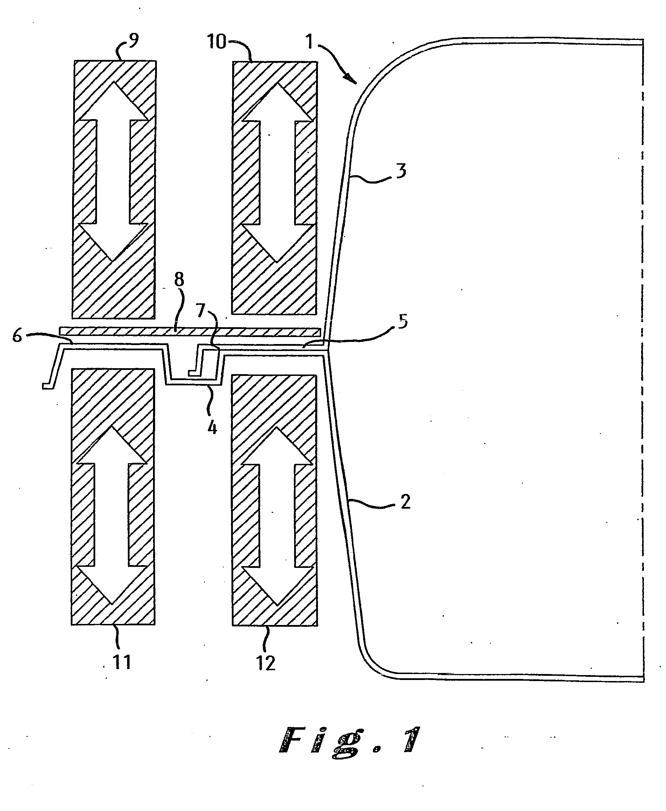

Figure 1 shows, schematically, a packaging container in accordance with the invention, designated as a whole with reference 1. The packaging container 1 comprises two container halves 2, 3 ("tray" or "pot" part 2, and "lid" or "dome" part 3), with its respective peripheral flanges 4 and 5. The corresponding peripheral flanges 4 and 5 of the container halves 2 and 3 each comprise a peripheral rim 6 and 7, shaped in such way that the surfaces of the respective rims 6, 7 of the corresponding flanges 4, 5 lie, in closed position of the container, substantially on one surface.

It appears clearly from figure 1 that the sealing of the two container halves can thus be achieved very easily by applying a peripheral sheet like sealing member (designated by reference 8) onto the peripheral flange 4, 5 of the container, covering together both rim surfaces 6, 7.

The packaging container 1 is sealed by welding the lower surface of the sealing member 8 (in particular the PE layer of a paper / PE sandwich sheet) to the upper surface of the rim 6 pertaining to the pot or tray half 2 of the packaging, as well as to the upper surface of the rim 7 pertaining to the lid or dome half 3 of the packaging. In order to perform the welding of the sealing member 8, melting heath has only to be applied by peripheral welding elements 9 and 10 provided on the sealing member side of the container (top side on the illustration), whereas the other side has only to be supported by corresponding peripheral supporting elements 11, 12.

Depending on the requirements of the product the sealing member 8 can be welded to the peripheral rims 6 and 7 over their entire periphery to provide a hermetically closed packaging, or only over part of the rims, just enough to provide a sufficient sealing of the packaging.

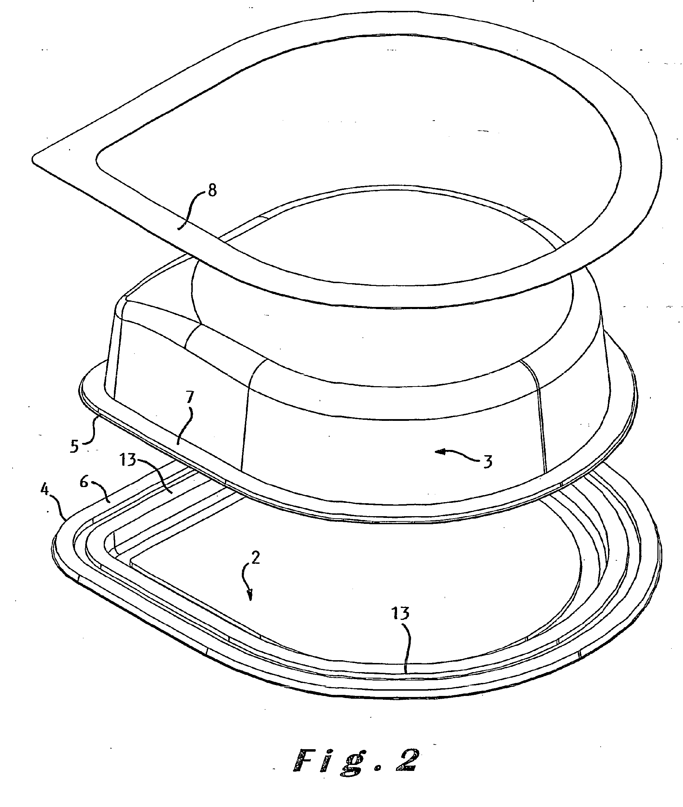

Figure 2 shows one totally arbitrary example of possible shapes for the constituent elements of a container according to the invention, with
- its tray halve 2, having peripheral flange 4 with a sealing rim 6,
- its dome lid 3, having a peripheral flange 5 with a sealing rim 7,
- its sealing member 8, consisting of a sheet like ring with a shape corresponding to the shape of the peripheral flanges 4 and 5.

In order to allow an optimal positioning of the container lid 3 on the container tray 2, as well as optimal performance of the welding elements 9, 10 and supporting elements 11, 12, the flange 4 of the container tray is provided with an additional peripheral rim 13 cooperating in shape with the peripheral rim 7 of the container lid 3.

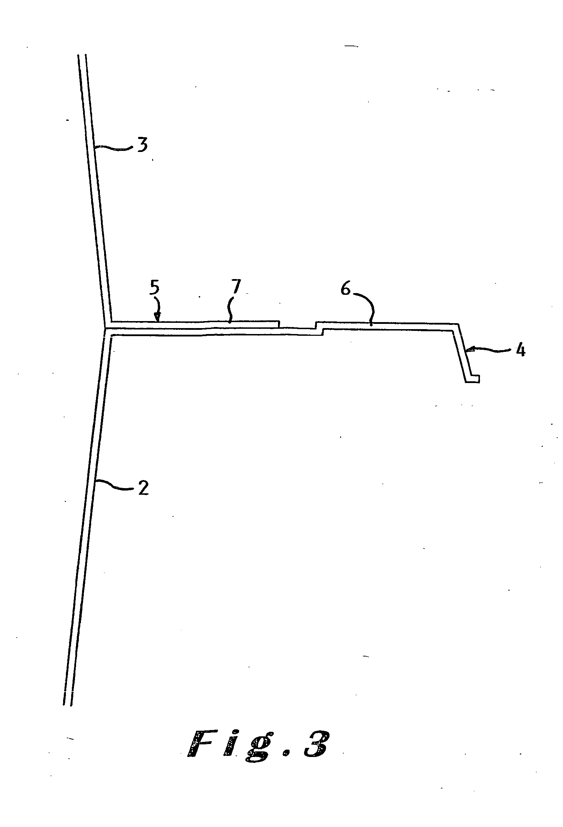

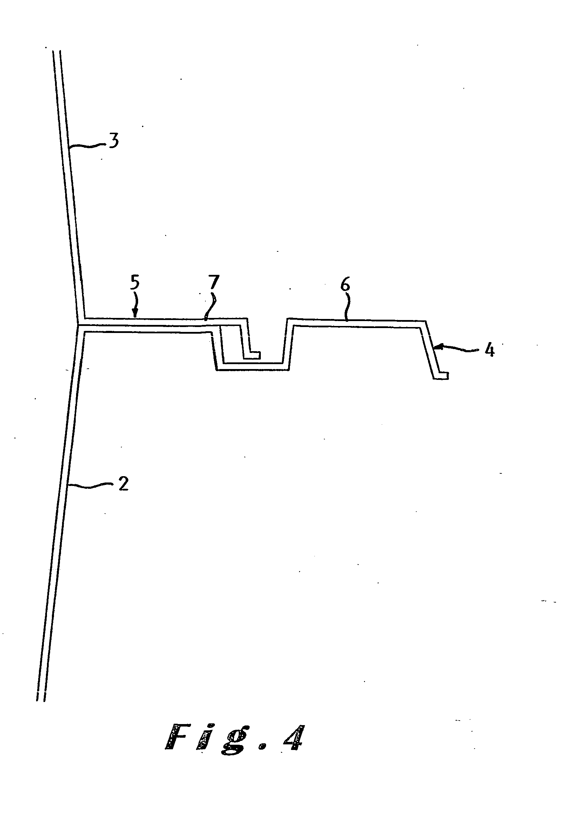

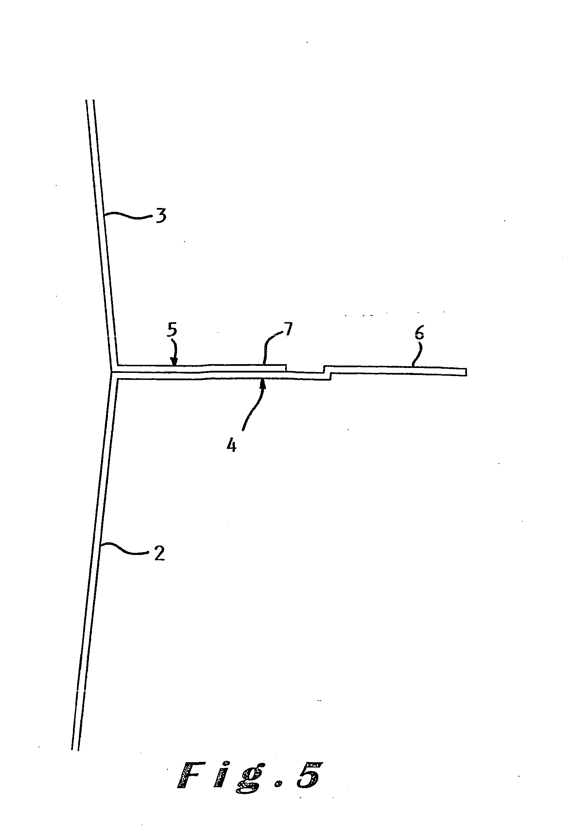

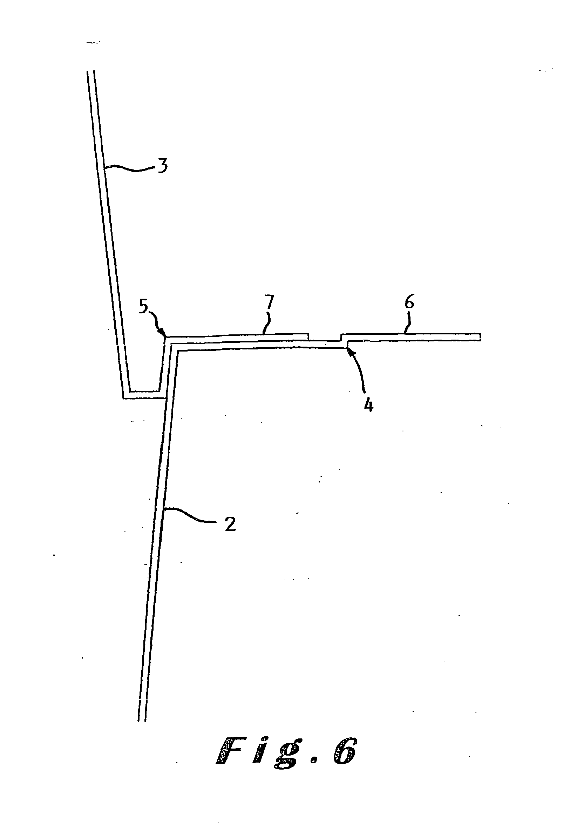

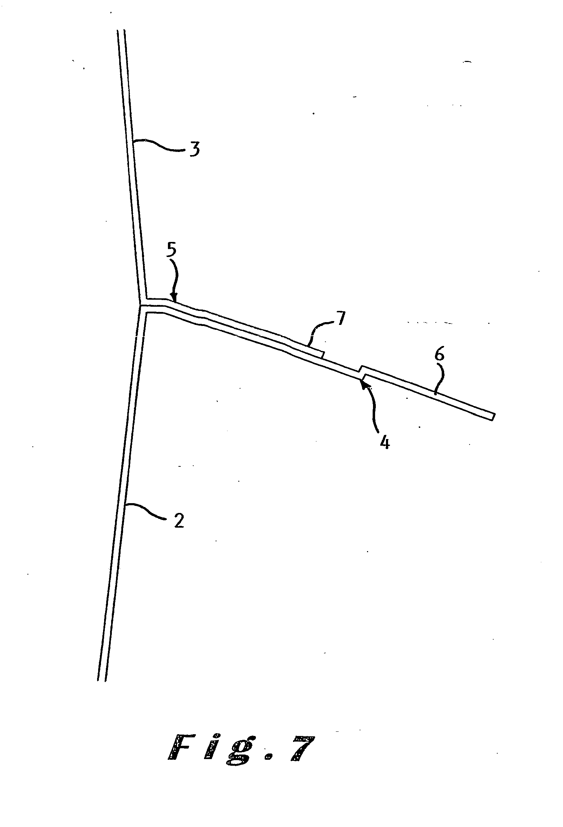

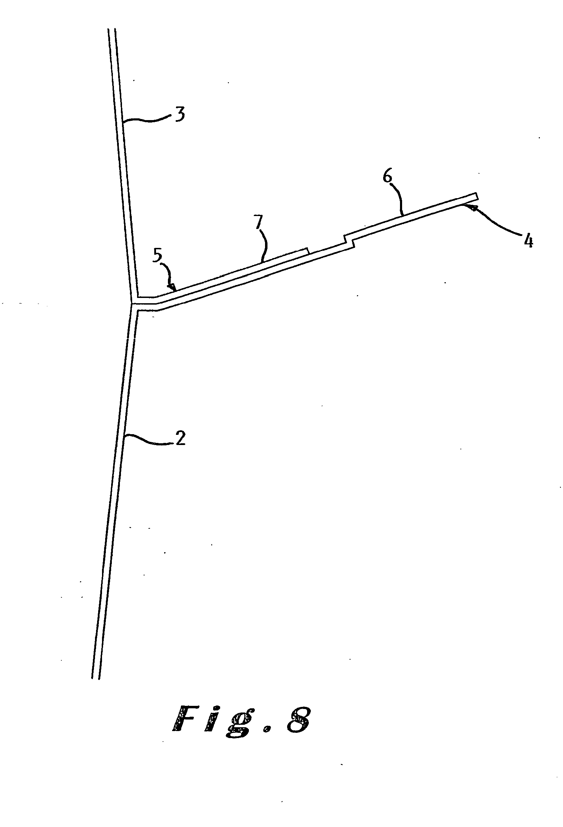

Figures 3-8 show, schematically, various other examples of possible embodiments of the shape of the peripheral rims 6 and 7 on, respectively the external tray or pot flange 4, and the lid flange 5.

It is thus observed that the rim and the flange may very well coincide, as in the embodiments of the lid or cover rims / flanges 5, 7 shown in figures 3, 5, 7 and 8.

While the invention has been disclosed in detail with reference to one specific embodiment of the invention, it is stressed that the invention is not limited to the specific details given for that embodiment and that many changes and modifications will be apparent to those skilled in the art without departing from the invention as set out in the above general disclosure and the attached claims

## Claims

1. Sheet like sealing member (8) having a flat shape for closing a packaging container involving two container halves (2,3), each comprising corresponding peripheral flanges (4,5) shaped in such way that the corresponding flanges provide, in closed position of the container, adjacent peripheral rims (6,7) lying substantially on one surface and allow the peripheral sealing of said container halves (2,3) by means of such sheet like sealing member (8) covering said adjacent peripheral rims (6,7), **characterised in that** said sheet like sealing member (8) comprises at least one first layer having a support function consisting of or comprising a material selected from paper and cardboard, and
at least one second layer having a sealing function, consisting of thermally active sealing material.

2. Sealing member according to claim 1, **characterised in that** said paper or cardboard layer remains stable under the applied sealing conditions and has a "basis weight" parameter of 100 g/m² to 180 g/m², and **in that** said second layer having a sealing function, has a "basis weight" parameter of 30 g/m² to 60 g/m².

3. Sealing member according to claim 2, **characterised in that** the composite sheet material comprising said two layers shows a rigidity index according to ASTM D 747 ranging from 0,75 to 15 Newton.

4. Sealing member according to claim 3, **characterised in that** the composite sheet material shows a maximum rigidity index according to one first direction of the sheet material ranging from 1,5 to 15 Newton and a minimum rigidity index according to a direction substantially perpendicular to said first direction of the sheet material, ranging from 0,75 to 7,5 Newton.

5. Sealing member according to claim 4, **characterised in that** the composite sheet material shows a maximum rigidity index according to one first direction of the sheet material ranging from 2 to 10 Newton and a minimum rigidity according to a direction substantially perpendicular to said first direction of the sheet material, ranging from 1,25 to 6 Newton.

6. Sealing member according to any one of the preceding claims, **characterised in that** said second layer having a sealing function is a seal/peal material comprising polyethylene and/or polyethylene terephthalate.

7. Sealing member according to any one of the preceding claims, **characterised in that** paper or cardboard layer is a printable outer layer.

8. Packaging container comprising two container halves (2,3) closed and sealed together via corresponding peripheral flanges (4,5) of said container halves (2,3), said peripheral flanges being shaped in such way that the corresponding flanges provide adjacent peripheral rims (6,7) lying substantially on one surface and being sealed together by means of a peripheral sheet like sealing member (8) covering said adjacent peripheral rims, **characterised in that** said container halves (2,3) are sealed by means of a peripheral sheet like sealing member (8) according to any one of claims1 to 7.

9. Packaging method comprising sealing two container halves (2,3) by welding a peripheral sheet like seating member (8) over adjacent peripheral rim surfaces (6,7) of corresponding peripheral flanges (4,5) of the container halves (2,3), **characterised in that** a sheet like sealing member (8) is used according to anyone of claims 1 to 7.

## Patentansprüche

1. Flächiges Siegelelement (8) mit einer flachen Form zum Verschließen eines Verpackungsbehältnisses bestehend aus zwei Behältnishälften (2,3), wobei jede Hälfte entsprechende periphere Ränder (4,5) umfasst, welche so geformt sind, dass die entsprechenden Ränder, in geschlossener Position des Behältnisses, angrenzende periphere Kantenflächen (6,7) bilden, die substanziell auf einer Fläche liegen und die periphere Versiegelung der erwähnten Behältnishälften (2,3) mittels eines solchen flächigen Siegelelements (8) ermöglichen, welches die erwähnten angrenzenden peripheren Kantenflächen (6,7) bedeckt, **dadurch gekennzeichnet, dass** das erwähnte flächige Siegelelement (8) zumindest eine erste Schicht umfasst, die eine Stützfunktion hat und aus einem aus Papier und Karton ausgewählten Material besteht oder solches umfasst, und zumindest eine zweite Schicht, die eine Siegelfunktion hat und aus thermisch aktivem Siegelmaterial besteht.

2. Siegelelement nach Anspruch 1, **dadurch gekennzeichnet, dass** die erwähnte Papier- oder Kartonschicht unter den angewendeten Siegelbedingungen stabil bleibt und einen "Basisgewicht"-Parameter von 100 g/m² bis 180 g/m² hat, und dass die erwähnte zweite Schicht, welche eine Siegelfunktion hat, einen "Basisgewicht"-Parameter von 30 g/m² bis 60 g/m² hat.

3. Siegelelement nach Anspruch 2, **dadurch gekennzeichnet, dass** das Komposit-Blattmaterial, welches die erwähnten zwei Schichten umfasst, einen Steifigkeitsindex nach ASTM D 747 im Bereich von 0,75 bis 15 Newton hat.

4. Siegelelement nach Anspruch 3, **dadurch gekennzeichnet, dass** das Komposit-Blattmaterial einen maximalen Steifigkeitsindex in einer ersten Richtung des Blattmaterials von 1,5 bis 15 Newton und einen minimalen Steifigkeitsindex in einer Richtung substanziell senkrecht zur erwähnten ersten Richtung des Blattmaterials von 0,75 bis 7,5 Newton aufweist.

5. Siegelelement nach Anspruch 4, **dadurch gekennzeichnet, dass** das Komposit-Blattmaterial einen maximalen Steifigkeitsindex in einer ersten Richtung des Blattmaterials von 2 bis 10 Newton und eine minimale Steifigkeit in einer Richtung substanziell senkrecht zur erwähnten ersten Richtung des Blattmaterials von 1,25 bis 6 Newton aufweist.

6. Siegelelement nach jedem der vorigen Ansprüche, **dadurch gekennzeichnet, dass** die erwähnte zweite Schicht, welche eine Siegelfunktion hat, ein Siegel- / Abziehmaterial ist, das Polyethylen und/oder Polyethylenterephthalat umfasst.

7. Siegelelement nach jedem der vorigen Ansprüche, **dadurch gekennzeichnet, dass** die Papier- oder Kartonschicht eine bedruckbare Außenschicht ist.

8. Verpackungsbehältnis bestehend aus zwei Behältnishälften (2,3), die über entsprechende periphere Ränder (4,5) der erwähnten Behältnishälften (2,3) geschlossen und miteinander versiegelt werden, wobei die erwähnten peripheren Ränder so geformt sind, dass die entsprechenden Ränder angrenzende periphere Kantenflächen (6,7) bilden, die substanziell auf einer Fläche liegen und mittels eines peripheren flächigen Siegelelements (8) miteinander versiegelt werden, welches die erwähnten angrenzenden peripheren Kantenflächen bedeckt, **dadurch gekennzeichnet, dass** die erwähnten Behältnishälften (2,3) mittels eines peripheren flächigen Siegelelements (8) nach jedem der Ansprüche 1 bis 7 versiegelt werden.

9. Verpackungsverfahren, welches die Versiegelung zweier Behältnishälften (2,3) durch Schweißen eines peripheren flächigen Siegelelements (8) über angrenzende periphere Kantenflächen (6,7) entsprechender peripherer Ränder (4,5) der Behältnishälften (2,3) umfasst, **dadurch gekennzeichnet, dass** ein flächiges Siegelelement (8) nach jedem der Ansprüche 1 bis 7 verwendet wird.

## Revendications

1. Élément de scellement en forme de feuille (8) ayant une forme plate pour fermer une coque d'emballage comprenant deux demi-coques (2, 3), chacune comprenant des collerettes périphériques correspondantes (4, 5) façonnées de telle manière que les collerettes correspondantes fournissent, en position fermée de la coque, des rebords périphériques adjacents (6, 7) situés sensiblement sur une surface et permettent le scellement périphérique desdites demi-coques (2, 3) au moyen d'un tel élément de scellement en forme de feuille (8) couvrant lesdits rebords périphériques adjacents, **caractérisé en ce que** ledit élément de scellement en forme de feuille (8) comprend au moins une première couche ayant une fonction de support consistant en une matière ou comprenant une matière choisie parmi du papier et du carton, et au moins une deuxième couche ayant une fonction de scellement, consistant en une matière de scellement thermiquement active.

2. Élément de scellement selon la revendication 1, **caractérisé en ce que** ladite couche de papier ou de carton reste stable dans les conditions de scellement appliquées et a un paramètre de « poids de base » de 100 g/m² à 180 g/m², et **en ce que** ladite deuxième couche ayant une fonction de scellement a un paramètre de « poids de base » de 30 g / m² à 60 g / m².

3. Élément de scellement selon la revendication 2, **caractérisé en ce que** la matière composite de la feuille comprenant deux couches présente un indice de rigidité selon la norme ASTM D 747 de l'ordre de 0,75 à 15 Newton.

4. Élément de scellement selon la revendication 3, **caractérisé en ce que** la matière composite dé la feuille présente un indice de rigidité selon une première direction de la matière de la feuille de l'ordre de 1,5 à 15 Newton et un indice de rigidité minimal selon une direction sensiblement perpendiculaire à ladite première direction de la matière de la feuille de l'ordre de 0,75 à 7,5 Newton.

5. Élément de scellement selon la revendication 4, **caractérisé en ce que** la matière composite de la feuille présente un indice de rigidité maximal selon une première direction de la matière de la feuille de l'ordre de 2 à 10 Newton et une rigidité minimale selon une direction sensiblement perpendiculaire à ladite première direction de la matière de la feuille de l'ordre de 1,25 à 6 Newton.

6. Élément de scellement selon une quelconque des revendications précédentes, **caractérisé en ce que** ladite deuxième couche ayant une fonction de scellement est une matière scellable / pellable comprenant du polyéthylène et / ou du polyéthylène téréphtalate.

7. Élément de scellement selon une quelconque des revendications précédentes, **caractérisé en ce que** la couche de papier ou de carton est une couche extérieure imprimable.

8. Coque d'emballage comprenant deux demi-coques (2, 3) fermées et scellées ensemble via des collerettes périphériques correspondantes (4, 5) desdites demi-coques, lesdites collerettes périphériques étant façonnées de telle manière que les collerettes correspondantes fournissent des rebords périphériques adjacents (6, 7) situés sensiblement sur une surface et étant scellés ensemble au moyen d'un élément de scellement périphérique en forme de feuille (8) couvrant lesdits rebords périphériques adjacents, **caractérisée en ce que** lesdites demi-coques (2, 3) sont scellées au moyen d'un élément de scellement périphérique en forme de feuille (8) selon une quelconque des revendications 1 à 7.

9. Procédé d'emballage consistant à sceller deux demi-coques (2, 3) en soudant un élément de scellement périphérique en forme de feuille (8) sur les surfaces de rebords périphériques adjacents (6, 7) de collerettes périphériques correspondantes (4, 5) des demi-coques (2, 3) **caractérisé en ce qu'**un élément de scellement en forme de feuille (8) est utilisé selon une quelconque des revendications 1 à 7.
